# EUROPÄISCHE PATENTSCHRIFT

(11) **EP 1 954 750 B1**
(45) Veröffentlichungstag und Bekanntmachung des Hinweises auf die Patenterteilung: **18.08.2010**
(21) Anmeldenummer: 06807731.2
(22) Anmeldetag: 03.11.2006
(51) Int. Cl.: C08J 9/00

(54) **SCHÄUMBARE ZUSAMMENSETZUNG ZUR HERSTELLUNG GESCHÄUMTER KUNSTSTOFFE**
FOAMABLE COMPOSITION FOR PRODUCTION OF FOAMED PLASTICS
COMPOSITION EXPANSIBLE POUR LA FABRICATION DE MATIERES PLASTIQUES EXPANSEES

(30) Priorität: 10.11.2005 DE 102005053697
(43) Veröffentlichungstag der Anmeldung: 13.08.2008
(73) Patentinhaber: Wacker Chemie AG, 81737 München (DE)
(72) Erfinder: WEIDINGER, Jürgen, 84570 Polling (DE)
(74) Vertreter: Fritz, Helmut
(86) Internationale Anmeldenummer: PCT/EP2006/068065
(87) Internationale Veröffentlichungsnummer: WO 2007/054463

(56) Entgegenhaltungen:
- EP-A- 1 491 578
- WO-A-2004/108807
- WO-A-2005/005511
- WO-A-2005/092959
- DE-A1-102004 015 093
- DE-A1-102004 035 198
- US-A1- 2003 205 832
- US-A1- 2005 245 626

## Beschreibung

Die Erfindung betrifft Zusammensetzungen, ihre Herstellung und deren Verwendung zur Herstellung von geschäumten Kunststoffen.

Geschäumte Kunststoffartikel sowie entsprechende Treibsysteme zur Schäumung beziehungsweise Expansion sind in der Literatur und im Patentwesen seit langem bekannt. Schäumen wird in diesem Bereich vor allem zur Gewichtsreduktion und zur Erzielung neuer Eigenschaften durchgeführt. In der Elastomertechnik kommt die erhöhte Kompressibilität hinzu. Elastomerschäume werden meist mittels chemischer Treibmittel erzeugt, welche beispielsweise bei erhöhter Temperatur oder durch Zusatz von Hilfsstoffen Gase, wie beispielsweise Stickstoff, Sauerstoff, CO₂, Wasserstoff und Wasserdampf, freisetzen. Die Expansion von Elastomeren führt naturgemäß zu einem Verlust an mechanischer Beanspruchbarkeit. Ebenso ist in vielen Fällen die Verwendbarkeit an bestimmte Vernetzungsysteme oder Formulierungen gebunden oder mit Einschränkungen bezüglich Arbeitssicherheit und späteren Einsatzzwecken behaftet.

Um einen Schaum mit möglichst guten mechanischen Daten, also mit niedrigem Druckverformungsrest, sowie hoher Beständigkeit beispielsweise gegenüber Temperatureinwirkung oder Chemikalien zu erhalten, werden bevorzugt Siliconelastomere als Kautschukbasis verwendet. Bisher konnte den oben genannten Nachteilen beziehungsweise Einschränkungen auch bezüglich des Erzeugens von Siliconschaum nicht oder nur sehr unzureichend begegnet werden. In der Patentschrift EP 0 751 174 B1 wird beispielsweise die Verwendung von gashaltigen hohlen Füllstoffen beschrieben. Nachteil dieser Technologien ist das Kollabieren der Hohlzellen bei gleichzeitiger Hitze- und Druckeinwirkung, also ein schlechter Druckverformungsrest.

In den Schriften EP 0 506 241 B1 wird mittels Alkohol, in EP 0 553 889 B1 mittels Wasser geschäumt. Beide Schaummittel haben den Nachteil, dass sie als polare Substanzen mit Silicon prinzipiell unverträglich sind. Daher müssen sie in der Elastomermatrix emulgiert werden, was zu starken Einschränkungen bezüglich Handhabung und Stabilität führt, es kommt beispielsweise zu Entmischungsphänomenen und Inhomogenitäten.

Weitere Treibsysteme, wie beispielsweise Phosphine, werden etwa in der Patenschrift EP 0 355 429 B1 beschrieben und sind mit denselben Problemen behaftet.

Wasserstoff-basierende Schäume, wie beispielsweise in EP 0 416 229 A2 beschrieben, sind bezüglich ihres Einsatzes sehr eingeschränkt, da sie nach Komponentenvermischung in situ eingesetzt werden müssen. Zudem weisen auch diese Schäume, obwohl sie niedrige Dichten erreichen können, nur geringe mechanische Festigkeiten auf.

Des Weiteren ist der Einsatz klassischer, Stickstoff-basierter Treibmittel, wie beispielsweise Azodicarbonamid und 2,2'-Azobis-isobutyronitril AIBN, aufgrund toxikologischer Überlegungen, wie beispielsweise durch Reinl, W., Erkrankungen durch Tetramethylbernsteinsäuredinitril bei der Schaumstoffherstellung, Archiv für Toxikologie, Band 16, Seite 367380, 1957 und Azobisisobutyronitrile, Health Council of the Netherlands, 2002, Publication 2002/01 OSH beschrieben, sowie aufgrund des mäßigen Druckverformungsrestes, wie Beispiel 8, Tabelle 1 dieser Schrift zeigt, nicht als zielführend anzusehen.

Schließlich werden in der Literatur, beispielsweise in den Patentschriften DE 197 50 697 A1 und EP 0 751 173 B1, CO₂-bildende Schäume erwähnt, die auf der Zersetzung von Carbonaten beruhen. Nachteil dieser Schäume ist entweder die inhomogene, wenig reproduzierbare Schaumstruktur, oder die Bildung eines geschlossenzelligen Schaums, welcher per Definition einen schlechteren Druckverformungsrest aufweist als offenporiger Schaum vergleichbarer Grundeigenschaften.

Aufgabe der Erfindung war daher, eine Zusammensetzung zur Verfügung zu stellen, die die oben genannten Nachteile vermindert oder sogar ganz beseitigt und die mittels verschiedener Extrusions- und Formgebungsverfahren einen Kunststoffschaum mit niedriger Dichte und guter mechanischer Belastbarkeit ergibt.

Diese Aufgabe wurde gelöst durch das Einarbeiten von Lösungsmittel freisetzenden Verbindungen in die grundlegende Kunststoffmatrix. Gegenstand der Erfindung ist daher eine Zusammensetzung enthaltend,
A) 100 Teile mindestens einer Kunststoffmatrix,
B) 0,1 bis 10 Teile mindestens eines Treibmittels.

Die erfindungsgemäße Zusammensetzung kann darüber hinaus
C) 0 bis 10 Teile weitere Treibmittel und
D) 0 bis 200 Teile weitere Bestandteile ausgewählt aus der Gruppe enthaltend Vernetzer, Verdickungsmittel, Verzögerer, Katalysatoren, Inhibitoren, Füllstoffe, wie verstärkende und nicht verstärkende Füllstoffe, Weichmacher, Haftvermittler, lösliche Farbstoffe, anorganische und organische Pigmente, Lösungsmittel, Fungizide, Duftstoffe, Dispergierhilfsmittel, rheologische Additive, Korrosionsinhibitoren, Oxidationsinhibitoren, Lichtschutzmittei, Hitzestabilisatoren, UV-Stabilisatoren, flammabweisend machende Mittel und Mittel zur Beeinflussung der elektrischen Eigenschaften und deren Mischungen
enthalten.

Überraschenderweise zeigte sich, dass die erfindungsgemäße Zusammensetzung bei Temperaturen, ab der Siedetemperatur der am Treibmittel B) gebundenen Flüssigkeit, zu einer gleichmäßigen und sehr unempfindlichen Expansion führt.

Bei der Kunststoffmatrix A) handelt es sich um Siliconkäutschuke, die bei höheren Temperaturen vernetzen, wobei Siliconkautschuke die bei 100 bis 250°C vernetzen, bevorzugt sind.

Die erfindungsgemäßen Treibmittel B) werden ausgewählt aus der Gruppe enthaltend kristalline, organische und anorganische Verbindungen, nicht kristalline Komplexbildner und Interkalatverbindungen.

Erfindungsgemäße kristalline Treibmittel B) sind beispielsweise Salze wie etwa Glaubersalz und Na₂SO₄. Erfindungsgemäße nicht kristalline Treibmittel B) zeigen typischerweise Schichtstrukturen mit Zwischenräumen, wie beispielsweise in Schichtsilicaten und Kaolin. Je nach Charakter des Substrats ist die Bindung beziehungsweise Einlagerung von polaren Flüssigkeiten, wie beispielsweise Wasser, oder eher unpolaren, wie beispielsweise THF, möglich.

Die an dem Treibmittel B) gebundenen Flüssigkeitsmoleküle werden ausgewählt aus der Gruppe enthaltend organische- und anorganische Lösungsmittel. Bevorzugt werden diese Lösungsmittel ausgewählt aus der Gruppe enthaltend Wasser, Alkohole, Amine, THF, Pentan, Hexan, Toluol und Ether oder Mischung davon. Besonders bevorzugtes Flüssigkeitsmolekül ist Wasser.

Je nach Charakter des Treibmittels B) können die Flüssigkeitsmoleküle durch unterschiedlichste Arten an das Treibmittel gebunden sein, beispielsweise rein physikalisch eingeschlossen, adsorbiert, kovalent gebunden, komplexiert oder in einer anderern Weise chemisch gebunden.

All diesen Flüssigkeiten gemein ist ihre potenzielle Flüchtigkeit bei höheren Temperaturen, im Falle von Kristallflüssigkeit beim Aufbrechen des Gitters und bei Interkalatflüssigkeit bei Erreichen der Energieschwelle zur Lösung der Bindungen. Dies bedeutet, dass bei richtiger Wahl des Treibmittels B) ein Schäumverhalten beispielsweise bei den für die Elastomerverarbeitung üblichen Temperaturen, normalerweise 100-200°C, eingestellt werden kann.

Bei richtiger Wahl dieser Interkalat- oder Kristallflüssigkeit enthaltenden Treibmittel B), ergeben sich, gegenüber den meisten bekannten Treibmittelsystemen, viele Vorteile für den Einsatz in transparenten oder opaken und sogar, bei entsprechender Wahl der Flüssigkeit, lebensmittelgeeigneten Kunststoff- und Elastomermassen. Zum ersten weisen sie ausgezeichnete mechanische Belastbarkeit auf, wie beispielsweise der Druckverformungsrest bei Gummis, die aufgrund der gemischtzelligen, größtenteils offenzelligen Struktur sehr gutes Rückstellvermögen zeigen. Weiterhin besteht eine hohe Allgemeinbeständigkeit der erfindungsgemäßen Zusammensetzung, da die nicht flüchtigen Rückstände des Treibmittels B) größtenteils chemisch inert sind und somit keine Wechselwirkung mit der Kunststoffmatix A) eingehen. Zudem sind sie beliebig einfärbbar, da sie selber meistens farblos sind. Es besteht kein negativer Einfluss auf die Oberflächeneigenschaften wie beispielsweise der Grip, sie sind zudem, bei entsprechender Wahl der Flüssigkeit, für Lebensmittel geeignet und entsprechen den BfR- oder FDA-Vorgaben. Auch sicherheitsrelevante Aspekte sprechen für die erfindungsgemäße Zusammensetzung, da sie, bei Verwendung von Wasser als Flüssigkeit, nicht brandfördernd ist und es nicht zur Bildung toxischer Verbrennungsprodukte im Brandfall kommt. Zudem kommt es zu keiner Wechselwirkung mit anderen Formulierungsbestandteilen in der Zusammensetzung.

Bevorzugte Interkalat- und Kristallflüssigkeit ist Wasser. Interkalat- oder Kristallwasser ist zwischen den Schichten beziehungsweise in die Kristallstruktur organischer oder anorganischer Verbindungen eingebundenes Wasser, welches man als so genanntes "Hydrat" in verschiedensten Bindungsverhältnissen findet. Beispielsweise wasserhaltige Zeolithe, Schichtsilicate, Kristallwasser enthaltende Salze, wie beispielsweise im bekannten Gips, wie auch in Proteinen beispielsweise Casein, und klassischen Salzen, beispielsweise Sulfate und Phosphate wie das Glaubersalz und Na₂SO₄ x 10 H₂O, sowie nichtkristalline wasserhaltige Komplexverbindungen.

Dem Einsatz der erfindungsgemäßen Treibmittel B) in der Kunststoffmatrix A), stehen keine Beschränkungen entgegen, da der geschäumte Artikel die Eigenschaften beibehält. In den europäischen Offenlegungsschriften EP 1 375 622 A1 und EP 1 266 948 A2 sind Silicone mit selbsthaftender Ausrüstung beschrieben, deren diesbezügliche Offenbarung ebenfalls Bestandteil dieser Anmeldung sein soll. Es konnte kein Einfluss auf diese selbsthaftende Ausrüstung durch die erfindungsgemäßen Treibmittel B) nachgewiesen werden. Im Gegensatz dazu zeigen allen anderen Treibmitteln, die dem Stand der Technik entsprechen, einen erkennbaren Einfluss auf die selbsthaftende Ausrüstung dieser Silicone.

Ein weiterer Vorteil der erfindungsgemäßen Treibmittel B) ist das Vorliegen als Feststoff, welcher sehr einfach und ohne zusätzliche Hilfsmittel in der Kunststoffmatrix A) dispergiert werden kann. Die eingemischten Treibmittel B) sind stabil und verändern sich bei entsprechender Lagerung nicht über die Zeit.

Zudem kann die erfindungsgemäße Zusammensetzung in beliebiger Kombination mit bekannten Treibmitteln, beispielsweise Carbonate, Stickstoffverbindungen, Wasser- und Alkohol-basierte Treibmittel verwendet werden, wobei die erfindungsgemäße Zusammensetzung die Schaum-Endeigenschaften verbessert. Die Treibmittel können daher sowohl als Feststoff eingemischt beziehungsweise vorher gelöst oder angebatcht werden oder direkt in der Matrix vorliegen.

Die Herstellung, Handhabung und Verarbeitung der erfindungsgemäßen Zusammensetzung erfolgt wie in der Kunststofftechnologie gewohnt, es sind somit keine speziellen Ausrüstungen nötig.

Ein weiterer Gegenstand der vorliegenden Erfindung ist ein Verfahren zur Herstellung der erfindungsgemäßen Zusammensetzung, dadurch gekennzeichnet, dass zur Herstellung eines Teil-Batches oder Batches die Komponenten B) bis D) in die Kunststoffmatrix A) eingeknetet oder eingemischt werden.

Die erfindungsgemäße Zusammensetzung wird zur Herstellung von Schaumstoffen verwendet. Das Verarbeitungsverfahren zur Herstellung der erfindungsgemäßen Schaumstoffe aus der erfindungsgemäßen Zusammensetzung erfolgt ebenfalls durch allgemein bekannte Verfahren, und ist dadurch gekennzeichnet, dass die Formgebung durch freies Schäumen, Extrusion und/oder Molding der Zusammensetzung erfolgt. Beispiele für Extrusionsverfahren sind Extrusion, Blasformen und Kalandrieren. Das Moldingverfahren erfolgt beispielsweise durch Spritzguss, Transferguss und Compression Molding.

Die mittels der erfindungsgemäßen Zusammensetzung erzielten Schäume zeichnen sich durch eine gemischtzellige Struktur mit gutem Druckverformungsrest, niedrigen Dichten und guten mechanischen und chemischen Eigenschaften aus. So liegt die Wasseraufnahme unter jener des offenzelligen Schaums, der Druckverformungsrest ist dem eines geschlossenzelligen Schaums überlegen.

### Beispiele

Beispiel 1: Herstellung eines Siliconschaum-Extrudatartikels 30 Teile wasserhaltiges technisches NaHSO₄ und 10 Teile Muskowit der Firma Goodfellow Corp., Devon, USA, ein Schichtsilicat, sowie 5 Teile Natriumacetat als Säureregulator zur Stabilisierung der Kondensation der Schichtpolykieselsäure werden in 50 Teilen Siliconpolymer, mit einer mittleren Kettenlänge von 10.000 SiO-Einheiten feinst dispergiert. In 100 Teile Siliconmatrix, bestehend aus Polymer sowie pyrogener Kieselsäure als Füllstoff, mit theoretischer Endhärte 60 Shore A werden anschließend 3 Teile der Dispersion unter Schereinwirkung eingeknetet.

Die Mischung wird mit 1 Teil 2,4-Dichlorbenzoylperoxid katalysiert und mit einem Standardextruder bei 230°C Heizkanaltemperatur extrudiert und vulkanisert.
Das resultierende Extrudat ist farblos und weist nach Tempern eine typische Dichte um 0,5 g/cm³ auf sowie einen typischen Druckverformungsrest (getempert) von <15% (22h bei 150°C, 25% Kompression).

Beispiel 2: Herstellung eines Siliconschaum-Formartikels 8 Gramm kristallwasserhaltige, pulverförmige, technische Dextrose der Firma Merck KGaA, Darmstadt, Deutschland werden auf einer leicht temperierten Walze mit minimalem Spalt und Friktion (1:1,3) in 100 ml eines niedrigviskosen Siliconpolymers mit einem Molgewicht von etwa 40.000 g/mol, der Firma Wacker Chemie GmbH, München, Deutschland, fein dispergiert. Die Walze wird nunmehr gekühlt und bei 3 mm Spaltweite und Friktion 1:1,1 wird die Dextrosemischung mit 800 Gramm katalysierter Siliconkautschuk-Fertigmischung ELASTOSIL® R *plus* 4001/40, der Firma Wacker Chemie GmbH, München, Deutschland der Endhärte 60 Shore A vermengt. Die fertige Schaummischung wird in einem ungefähren Unterschuss von 80% in eine Verdrängerform gefüllt, diese geschlossen und in einem Ofen auf 250°C geheizt. Nach 10 min wird entformt und der Austrieb entfernt. Der geschäumte Artikel weist getempert eine Dichte um 0,75 g/cm³ auf bei einem ungefähren Druckverformungsrest (getempert) von <25% (22h bei 150°C, 25% Kompression).

Beispiel 3: Herstellung einer Silicon-Schaumplatte
Wie in Beispiel 2 wird eine Mischung erzeugt. Die Mischung wird auf der Walze etwa 2 mm stark auf eine Polytetrafluorethylen-Folie kalandiert und anschließend über eine Heizstrecke bei 220°C geschickt. Die Expansion erfolgt frei und ergibt Schaumplatten mit geschlossener Oberfläche und ungefährer Dichte 0,5 g/cm³ sowie gutem Druckverformungsrest.

Beispiel 4 bis 8: Messung und Vergleich von Druckverformungsresten an Schaumextrudat-Artikeln
Fünf Siliconkautschuk-Mischungen Beispiele 4, 5, 6 und 8 mit ELASTOSIL® R 401/40, Beispiel 7 mit ELASTOSIL® R plus 4305/40, der Firma Wacker Chemie GmbH, München, Deutschland, enthaltend jeweils eine 40 Shore Ä Kautschukbasis, Vulkanisationsaditive, sowie in Beipiel 4 emulgiertes Wasser als Treibmittel (analog zu EP 0 553 889 B1), in Beispiel 5 gasgefüllte Thermoplast-Hohlkugeln (analog zu EP 0 751 174 B1), in Beispiel 6 und Beispiel 7 erfindungsgemäße Treibmittelsysteme (analog zu Beispiel 1 und Beispiel 2), in Beispiel 8 handelsübliches AIBN der Firma Merck KGaA, Darmstadt, Deutschland, werden derart extrudiert, dass unter Variation von Extrusionsgeschwindigkeit und Temperatur sowie der Geometrie des Extruderwerkzeugs jeweils innerhalb des Verarbeitungsfensters optimal expandierte 6mm-Rundschnurprofile entstehen. Die Rundschnüre werden getempert (für 4 Stunden bei 200°C) beziehungsweise ungetempert in eine Metallform eingelegt, welche beim Schließen eine Komprimierung der geschäumten Rundschnüre von 30% erzeugt. Die Form wird für 22 Stunden bei 150°C gelagert, anschließend entspannt und der Durchmesser der Profile nach Abkühlen erneut bestimmt. Es ergibt sich die bleibende Verformung, als Druckverformungsrest DVR bezeichnet, am Schaumteil. Die Ergebnisse des DVR der verschieden geschäumten, aber ansonsten identischen 40 Shore A Siliconkautschuke, sind in der Tabelle 1 wiedergegeben. Die erfindungsgemäßen Beispiele 6 und 7 zeigen ein vergleichbares oder sogar besseres Ergebnis als die Beispiele 4, 5 und 8 gemäß dem Stand der Technik.

**Tabelle 1**

| Beispiel | DVR ungetempert | DVR getempert |
|---|---|---|
| 4* | 20% | 15% |
| 5* | 56% | 30% |
| 6 | 14% | 10% |
| 7 | 22% | 13% |
| 8* | 40% | 28% |

| | | |
|---|---|---|
| * nicht erfindungsgemäß | | |

## Patentansprüche

1. Zusammensetzung enthaltend,
A) 100 Teile mindestens einer Kunststoffmatrix ausgewählt aus der Gruppe enthaltend Siliconkautschuke,
B) 0,1 bis 10 Teile mindestens eines Treibmittels ausgewählt aus der Gruppe enthaltend
- kristalline, organische und anorganische Verbindungen mit gebundenen Flüssigkeitsmolekülen,
- nicht kristalline Komplexbildner mit gebundenen Flüssigkeitsmolekülen,
- Interkalatverbindungen mit gebundenen Flüssigkeitsmolekülen.

2. Zusammensetzung gemäß Anspruch 1, **dadurch gekennzeichnet, dass** sie
C) 0 bis 10 Teile weitere Treibmittel und
D) 0 bis 200 Teile weiterer Bestandteile ausgewählt aus der Gruppe enthaltend Vernetzer, Verdickungsmittel, Verzögerer, Katalysatoren, Inhibitoren, Füllstoffe, wie verstärkende und nicht verstärkende Füllstoffe, Weichmacher, Haftvermittler, lösliche Farbstoffe, anorganische und organische Pigmente, Lösungsmittel, Fungizide, Duftstoffe, Dispergierhilfsmittel, rheologische Additive, Korrosionsinhibitoren, Oxidationsinhibitoren, Lichtschutzmittel, Hitzestabilisatoren, UV-Stabilisatoren, flammabweisend machende Mittel und Mittel zur Beeinflussung der elektrischen Eigenschaften und deren Mischungen
enthält.

3. Zusammensetzung gemäß Anspruch 1 oder 2, **dadurch gekennzeichnet, dass** die Flüssigkeitsmoleküle ausgewählt werden aus der Gruppe enthaltend Wasser, Alkohol, Amine, THF, Pentan, Hexan, Toluol und Ether und deren Mischungen.

4. Verfahren zur Herstellung der Zusammensetzung gemäß einem der Ansprüche 1 bis 3, **dadurch gekennzeichnet, dass** zur Herstellung eines Teil-Batches oder Batches die Komponenten B) bis D) in die Kunststoffmatrix A) eingeknetet oder eingemischt werden.

5. Verwendung der Zusammensetzung gemäß einem der Ansprüche 1 bis 4 zur Herstellung von Schaumstoffen.

## Claims

1. Composition comprising
A) 100 parts of at least one plastics matrix selected from the group consisting of silicone rubbers,
B) from 0.1 to 10 parts of at least one blowing agent selected from the group consisting of
- crystalline, organic and inorganic compounds having bound liquid molecules,
- non-crystalline complexing agents having bound liquid molecules,
- intercalate compounds having bound liquid molecules.

2. Composition according to Claim 1, **characterized in that** it comprises
C) from 0 to 10 parts of further blowing agents, and
D) from 0 to 200 parts of further constituents selected from the group consisting of crosslinking agents, thickeners, retarders, catalysts, inhibitors, fillers, such as reinforcing and non-reinforcing fillers, plasticizers, adhesion promoters, soluble dyes, inorganic and organic pigments, solvents, fungicides, odorants, dispersing agents, rheology additives, corrosion inhibitors, oxidation inhibitors, light stabilizers, heat stabilizers, UV stabilizers, flame retardants, and agents affecting electrical properties, and mixtures of these.

3. Composition according to Claim 1 or 2, **characterized in that** the liquid molecules are selected from the group consisting of water, alcohol, amines, THF, pentane, hexane, toluene, and ethers, and mixtures of these.

4. Process for the production of the composition according to any of Claims 1 to 3, **characterized in that**, for the production of a sub-batch or batch, components B) to D) are incorporated into the plastics matrix A) by kneading or by mixing.

5. Use of the composition according to any of Claims 1 to 4 for the production of foams.

## Revendications

1. Composition contenant
A) 100 parties d'au moins une matrice en matière plastique choisie dans le groupe contenant des caoutchoucs silicone,
B) 0,1 à 10 parties d'au moins un agent d'expansion choisi dans le groupe contenant
- des composés cristallins, organiques et inorganiques à molécules de liquide liées,
- des complexants non cristallins à molécules de liquide liées,
- des composés d'intercalation à molécules de liquide liées.

2. Composition selon la revendication 1, **caractérisée en ce qu'**elle contient
C) 0 à 10 parties d'autres agents d'expansion et
D) 0 à 200 parties d'autres composants choisis dans le groupe contenant des agents de réticulation, des épaississants, des retardateurs, des catalyseurs, des inhibiteurs, des charges, telles que des charges de renfort et des charges qui ne renforcent pas, des plastifiants, des promoteurs d'adhérence, des colorants solubles, des pigments organiques et inorganiques, des solvants, des fongicides, des parfums, des adjuvants de dispersion, des additifs pour l'ajustement de la rhéologie, des agents anticorrosion, des antioxydants, des photoprotecteurs, des stabilisants thermiques, des stabilisants UV, des agents rendant ignifuge et des agents destinés à influer sur les propriétés électriques et des mélanges de ceux-ci.

3. Composition selon la revendication 1 ou 2, **caractérisée en ce que** les molécules de liquide sont choisies dans le groupe contenant l'eau, un alcool, des amines, le THF, le pentane, l'hexane, le toluène et des éthers et des mélanges de ceux-ci.

4. Procédé pour la préparation de la composition selon l'une quelconque des revendications 1 à 3, **caractérisé en ce que** pour la préparation d'une charge de départ ou d'une charge partielle de départ on introduit par malaxage ou mélange les composants B) à D) dans la matrice en matière plastique A).

5. Utilisation de la composition selon l'une quelconque des revendications 1 à 4 pour la production de mousses.
